# EUROPEAN PATENT APPLICATION

(11) **EP 4 293 804 A1**
(43) Date of publication of application: **20.12.2023**
(21) Application number: 23177654.3
(22) Date of filing: 06.06.2023
(51) Int. Cl.: H01M 50/204, H01M 50/271, H01M 50/289, H01M 50/367

(54) **BATTERY BOX AND BATTERY MODULE**

(30) Priority: 16.06.2022 CN 202221516826 U
(71) Applicant: VOLKSWAGEN AG, 38440 Wolfsburg (DE)
(72) Inventor: Vassen, Heinz-Willi, Wolfsburg (DE); Liming, Wang, 38436 Wolfsburg (DE); Shuo, Wang, 38436 Wolfsburg (DE); Jingyu, Wang, 38436 Wolfsburg (DE)

(57) **Abstract**

The present utility model discloses a battery case and a battery pack, comprising: a housing, for accommodating a battery module; multiple support beams arranged on a wall of the housing, for contiguously supporting the accommodated battery module; wherein a corresponding space region is formed between at least two adjacent support beams of the multiple support beams when the battery module is contiguously supported, the space region forming a pressure relief cavity for a gas vent valve at the bottom of the battery module to vent gas into. The present utility model uses multiple support beams to provide weight support for the battery module, without any need for the whole of a bottom face of the battery module to be adhered to the housing; thus, the space region formed is ingeniously used as a pressure relief cavity which is isolated from a high-voltage connection chamber of the battery pack, and gas vented by the battery module during thermal runaway does not need to pass through a weak point, so the process of battery module gas venting is smooth. Furthermore, the present utility model has the advantages of being low-cost with a simple structure, and being easy to manufacture.

## Description

### Technical field

The present utility model relates to the technical field of batteries, in particular to a battery case and a battery pack.

### Background art

At present, battery pack designs mainly fall into the following types:
1. Elongated battery modules: pole posts and anti-explosion valves are arranged at side edges of the battery module, the whole of the bottom of the battery module is adhered to a battery pack housing and thus fixed in place, while the top is adhered to a cooling plate by means of thermally conductive structural glue.
2. General-purpose square-cased battery modules: pole posts and anti-explosion valves are arranged at the top of the battery module, and the whole of the bottom of the battery module is adhered using thermally conductive structural glue to a cooling plate located at the bottom of a battery pack housing.
3. Bottom-vented battery modules: the battery module is fixed to a battery pack housing by bolts or glue adhesion, etc., while a cooling plate is arranged at the bottom, and a weak point for pressure relief in the event of thermal runaway is arranged in a region of the cooling plate corresponding to bottom venting of the battery module.

In the first two of the above designs, when the battery module experiences thermal runaway, high-temperature gas will be vented into a high-voltage connection chamber of the battery pack, so there is a risk of short-circuiting; in the third design, gas vented from the battery module needs to first pass through the weak point, so there is a risk of failure. Thus, there is a need to propose a battery case and battery pack, to at least partially solve the problems in the prior art.

### Summary of the utility model

In this section, a series of concepts in simplified form are introduced; these will be explained in further detail in the detailed description of embodiments. This section does not signify an attempt to define key features and necessary technical features of the claimed technical solution, nor does it signify an attempt to determine the scope of protection of the claimed technical solution.

To at least partially solve the abovementioned problems, the present utility model provides a battery case and a battery pack, comprising: a housing, for accommodating a battery module;
multiple support beams arranged on a wall of the housing, for contiguously supporting the accommodated battery module;
wherein a corresponding space region is formed between at least two adjacent support beams of the multiple support beams when the battery module is contiguously supported, the space region forming a pressure relief cavity for a gas vent valve at the bottom of the battery module to vent gas into.

Preferably, a wall of the housing is the bottom of the battery case.

Preferably, a cooling plate is provided at the top of the housing, and a side of the cooling plate that is in contact with the battery module is provided with a non-adhesive thermally conductive layer.

Preferably, the side of the battery module that faces towards the pressure relief cavity is provided with a first fire protection layer.

Preferably, a region of the battery module in contact with the support beam is connected by means of an adhesive layer.

Preferably, the multiple support beams comprise: multiple transverse beams and multiple longitudinal beams arranged to intersect each other horizontally and perpendicularly;
two adjacent said transverse beams form a corresponding space region when contiguously supporting the battery module, and the multiple longitudinal beams divide the space region into multiple space units to form pressure relief cavities for gas vent valves at the bottom of the battery module to vent gas into.

Preferably, gas vent holes in communication with the pressure relief cavities are provided on the transverse beams, and a gas vent channel in communication with the gas vent holes is provided inside a wall of the housing;
a filtering gas exit valve is provided on the housing, one end of the gas vent channel being in communication with the filtering gas exit valve, and a gas outlet of the filtering gas exit valve facing towards the outside of the housing.

Preferably, the gas vent channel is arranged around the outside of the multiple pressure relief cavities.

Preferably, a second fire protection layer is provided on a wall of the housing which is opposite the gas vent valve.

The present utility model also provides a battery pack, comprising the battery case according to any one of the embodiments above.

Compared with the prior art, the present utility model at least includes the following beneficial effects:
The battery case and battery pack according to the present utility model can provide weight support for the battery module by means of the multiple support beams, without any need for the whole of the bottom face of the battery module to be adhered to the bottom plate; thus, ingenious use is made of the bottom face of the battery module, the bottom plate and the hollow region to form the pressure relief cavity which is isolated from a high-voltage connection chamber of the battery pack, so that high-temperature gas vented by the battery module during thermal runaway is separated from the high-voltage connection chamber, thus avoiding a short circuit. Moreover, the gas vented by the battery module during thermal runaway does not need to pass through a weak point, so the process of battery module gas venting is smooth. Furthermore, the battery case has the advantages of being low-cost with a simple structure, and being easy to manufacture.

With regard to the battery case and battery pack according to the present utility model, other advantages, objectives and features of the present utility model will partly be reflected in the following description, and partly be understood by those skilled in the art through study and implementation of the present utility model.

### Brief description of the drawings

The drawings are intended to provide further understanding of the present utility model, and form part of this Description; together with embodiments of the present utility model, they are used to explain the present utility model without limiting it. In the drawings:
Fig. 1 is a schematic exploded structural drawing of the battery pack according to the present utility model.
Fig. 2 is a schematic structural drawing of the battery case according to the present utility model, with the cooling plate and part of the battery module removed.
Fig. 3 is a schematic structural drawing of the battery case according to the present utility model, with the bottom plate removed.
Fig. 4 is a schematic sectional structural drawing of the battery case according to the present utility model.
Fig. 5 is a schematic drawing showing the direction of gas flow during gas venting from the battery case according to the present utility model.
   1 - housing; 110 - gas vent groove; 2 - support beam; 210 - transverse beam; 211 - gas vent hole; 220 - longitudinal beam; 3 - bottom plate; 4 - battery module; 5 - gas vent valve; 6 - pressure relief cavity; 7 - cooling plate; 8 - first fire protection layer; 9 - gas vent channel; 10 - filtering gas exit valve; 11 - hollow region.

### Detailed description of embodiments

The present utility model is described in further detail below with reference to the drawings and embodiments, to enable a person skilled in the art to implement the utility model based on the text herein.

It should be understood that terms such as "having", "including" and "comprising" used herein do not rule out the presence or addition of one or more other elements or combinations thereof.

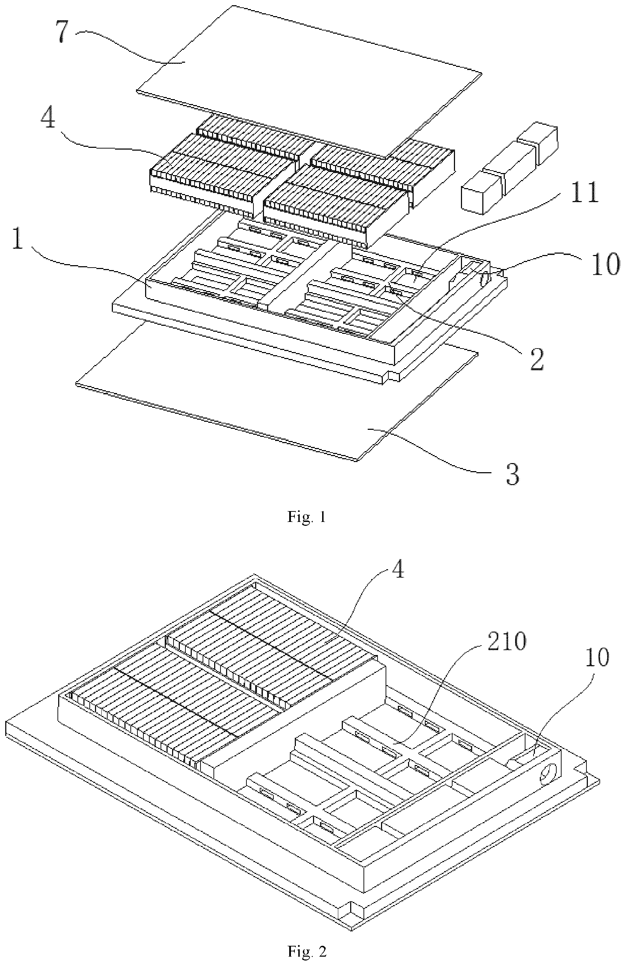

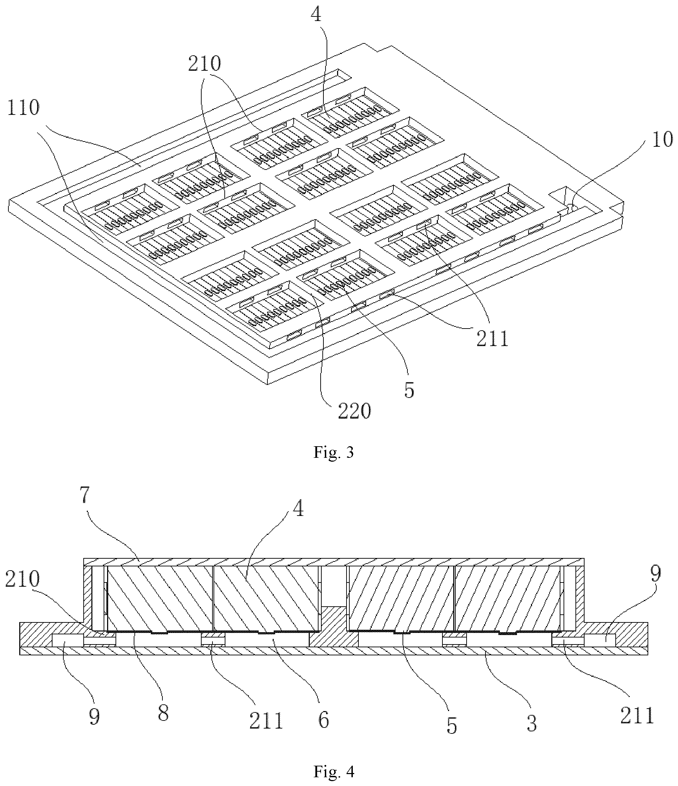

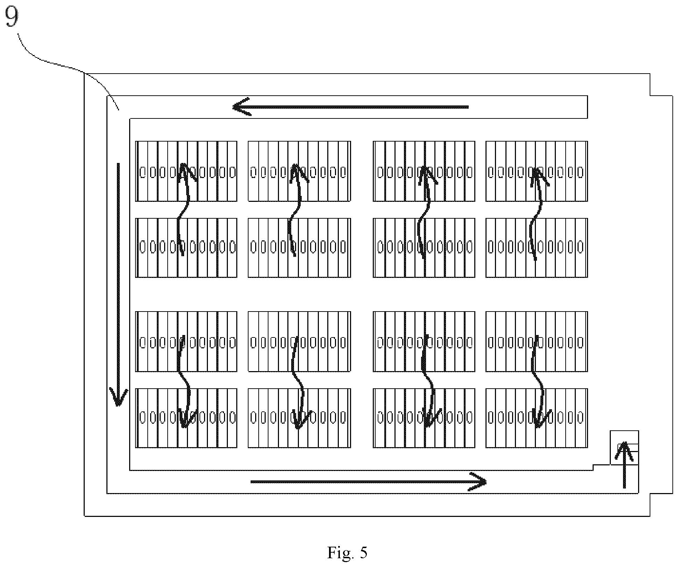

As shown in Figs. 1-5, the present utility model provides a battery case and a battery pack, comprising:
a housing 1, for accommodating a battery module 4;
multiple support beams 2 arranged on a wall of the housing 1, for contiguously supporting the accommodated battery module 4;
wherein a corresponding space region is formed between at least two adjacent support beams 2 of the multiple support beams 2 when the battery module 4 is contiguously supported, the space region forming a pressure relief cavity 6 for a gas vent valve 5 at the bottom of the battery module 4 to vent gas into;
wherein a wall of the housing 1 is the bottom of the battery case.

Operating principles of the technical solution described above: regarding the arrangement positions of the multiple support beams 2 on the housing 1, the present utility model is not limited to this, and they may be on any wall of the housing 1;
the multiple support beams 2 may be arranged as follows: the multiple support beams 2 are arranged in parallel or the multiple support beams 2 are arranged longitudinally and transversely in an intersecting fashion, with a region enclosed between at least two adjacent support beams 2 forming a hollow region 11, and the pressure relief cavity 6 being formed by the hollow region 11, a bottom face of the housing 1 and a bottom face of the battery module 4;
a bottom plate 3 is provided at the bottom of the housing 1, the bottom plate 3 being configured as the bottom of the battery case, and the bottom plate 3 being fixed to the bottom of the housing 1 by screw connection; there is a sealed connection between the bottom plate 3 and the support beam 2, so that the pressure relief cavity 6 formed is a sealed cavity;
the battery module 4 is composed of multiple battery units, with a gas vent valve 5 provided at the bottom of each battery unit; a partial region of the bottom of the battery module 4 is fixed to the support beams 2 by adhesion, the support beams 2 providing weight support for the battery module 4, and the gas vent valves 5 arranged at the bottom of the battery module 4 correspond to the hollow regions 11; thus, the space regions formed by the bottom face of the battery module 4, the bottom face of the housing 1 and the hollow regions 11 are pressure relief cavities 6, and when one of the battery units vents gas through the gas vent valve 5 during thermal runaway, the gas is vented directly into the pressure relief cavity 6, and vented to the outside of the housing 1 via the pressure relief cavity 6.

Beneficial effects of the technical solution described above: through the design of the structure above, the multiple support beams 2 can provide weight support for the battery module 4, without any need for the whole of the bottom face of the battery module 4 to be adhered to the bottom plate; thus, ingenious use is made of the bottom face of the battery module 4, the bottom plate 3 and the hollow region 11 to form the pressure relief cavity 6 which is isolated from a high-voltage connection chamber of the battery pack, so that high-temperature gas vented by a battery unit during thermal runaway is separated from the high-voltage connection chamber, thus avoiding a short circuit. Moreover, the gas vented by the battery unit during thermal runaway does not need to pass through a weak point, so the process of battery unit gas venting is smooth. Furthermore, this gas venting structure has the advantages of being low-cost with a simple structure, and being easy to manufacture.

In one embodiment, a cooling plate 7 is provided at the top of the housing 1; a side of the cooling plate 7 that is in contact with the battery module 4 is provided with a non-adhesive thermally conductive layer.

Operating principles and beneficial effects of the technical solution described above: the cooling plate 7 is arranged at the top of the battery module 4 and fixed to the top of the housing 1 by screw connection, which can avoid a situation where the cooling plate 7 bears the weight of the battery module 4, thereby avoiding an increase in weight and structural complexity; moreover, gas vented by a battery unit during thermal runaway does not need to pass through the cooling plate 7 to enter the pressure relief cavity 6, so the cooling area is increased in comparison with common bottom-vented battery units and designs with bottom cooling;
the non-adhesive thermally conductive layer employs a non-adhesive thermally conductive glue or thermally conductive pad, to achieve a thermally conductive connection to the battery module 4, without being fixed by adhesion to the battery module 4, instead being detachably connected to the top of the housing 1, thereby facilitating separate replacement of the cooling plate.

In an embodiment, a first fire protection layer 8 is provided on the side of the battery module 4 that faces towards the pressure relief cavity 6.

Operating principles and beneficial effects of the technical solution described above: the bottom of the battery module 4 is a constituent part of the pressure relief cavity 6, so when a battery unit vents gas during thermal runaway, high-temperature gas or flames will contact the bottom of the battery module 4; to better protect the battery module 4, a fire-retardant, thermally isolating coating is applied to the bottom face thereof to form the first fire protection layer 8, thus protecting battery units which have not experienced thermal runaway, and isolating the generated high-temperature gas or flames from the high-voltage connection chamber, thus making it possible to meet heat diffusion protection requirements while reducing the structural complexity.

In one embodiment, a region of the battery module 4 in contact with the support beam 2 is connected by means of an adhesive layer.

Operating principles and beneficial effects of the technical solution described above: two opposite sides of the bottom face of the battery module 4 are fixed to the support beams 2 by means of the adhesive layer, which is preferably structural glue; the use of this fixing method simplifies the installation structure of the housing 1 and the battery module 4.

In one embodiment, the multiple support beams 2 comprise: multiple transverse beams 210 and multiple longitudinal beams 220 arranged to intersect each other horizontally and perpendicularly;
two adjacent said transverse beams 210 form a corresponding space region when contiguously supporting the battery module 4, and the multiple longitudinal beams 220 divide the space region into multiple space units to form pressure relief cavities 6 for gas vent valves 5 at the bottom of the battery module 4 to vent gas into.

Operating principles and beneficial effects of the technical solution described above: the multiple transverse beams 210 and multiple longitudinal beams 220 are arranged to intersect each other horizontally and perpendicularly, with two adjacent transverse beams 210 and two longitudinal beams 220 enclosing a hollow region 11 therebetween, each hollow region 11 being able to accommodate multiple gas vent valves 5; two sides of the bottom face of the battery module 4 are adhered to the transverse beams 210, multiple battery units are arranged in the length direction of the transverse beams 210, the gas vent valves 5 on the battery units are kept away from the longitudinal beams 220, and partial regions of the battery units in contact with the longitudinal beams 220 are also fixed by adhesion, providing effective support for the battery module 4.

In one embodiment, a gas vent hole 211 in communication with the pressure relief cavity 6 is provided on the transverse beam 210, and a gas vent channel 9 in communication with the gas vent hole 211 is provided inside a wall of the housing 1;
a filtering gas exit valve 10 is provided on the housing 1, one end of the gas vent channel 9 being in communication with the filtering gas exit valve 10, and a gas outlet of the filtering gas exit valve 10 facing towards the outside of the housing 1.

Operating principles and beneficial effects of the technical solution described above: the bottom face of the housing 1 that is connected to the bottom plate 3 is provided with a gas vent groove 110 in communication with the gas vent hole 211, the gas vent channel 9 being formed between the gas vent groove 110 and the bottom plate 3; a top face and a bottom face of the transverse beam 210 are fixed to the battery module 4 and the bottom plate 3 respectively, the gas vent hole 211 is arranged on a side face of the transverse beam 210 located in the pressure relief cavity 6 in such a way as to run therethrough, communication is established between adjacent pressure relief cavities 6 by means of the gas vent hole 211, and the gas vent hole 211 on the outermost transverse beam 210 is in communication with the gas vent groove 110; when a battery unit vents gas during thermal runaway, high-temperature gas will first be vented into the pressure relief cavity 6, then enter the closest gas vent channel 9 in communication with the pressure relief cavity 6, and finally be vented to the outside of the housing 1 by the filtering gas exit valve 10; the filtering gas exit valve 10 can filter the flames produced during runaway of the battery unit, so that flames are not vented to the outside of the housing 1, causing serious harm.

In one embodiment, a partition plate is provided in the housing 1, being located at one side of the battery module 4; and the filtering gas exit valve 10 is provided at the side of the partition plate which is remote from the battery module 4.

Operating principles and beneficial effects of the technical solution described above: the partition plate separates the filtering gas exit valve 10 and the battery module 4 located in the housing 1, while the high-voltage connection chamber of the battery pack is formed by one side of the partition plate, the housing 1 and the bottom plate 3, said side being the side which is remote from the battery module 4; and the bottom plate 3 seals the bottom face of the housing 1 and all of the pressure relief cavities 6, so high-temperature gas or flames produced by a battery unit during runaway will not enter the high-voltage connection chamber, thus achieving effective isolation.

In one embodiment, the gas vent channel 9 is arranged around the outside of the multiple pressure relief cavities 6.

Operating principles and beneficial effects of the technical solution described above: the gas vent channel 9 is arranged around the outside of the two outermost transverse beams 210 in a continuous fashion, high-temperature gas or flames in all of the pressure relief cavities 6 is vented into the gas vent channel 9 through the gas vent holes 211 in the outermost two transverse beams 210, and finally vented to the outside of the housing 1 through the filtering gas exit valve 10 from one end of the gas vent channel 9, thus achieving efficient venting of gas.

In one embodiment, a second fire protection layer is provided on a wall of the housing 1 which is opposite the gas vent valve 5.

Operating principles and beneficial effects of the technical solution described above: a wall of the housing 1 in this embodiment is the bottom plate 3, and the bottom plate 3 participates in the sealing of the entire battery pack, i.e. the bottom plate 3 is in sealed connection with the bottom face of the housing 1, the bottom face of the transverse beam 210, a bottom face of the longitudinal beam 220 and a bottom face of the partition plate; to ensure that the bottom plate 3 is not penetrated during thermal runaway of a battery unit, the second fire protection layer is arranged at the side of the bottom plate 3 which is opposite the gas vent valve 5, to provide fire protection and thermal isolation.

The present utility model also provides a battery pack, comprising the battery case according to any one of the embodiments above.

Operating principles and beneficial effects of the technical solution described above: the battery pack comprises: a housing 1, a bottom plate 3, a battery module 4 and a cooling plate 7; a battery unit installation zone for installing the battery module 4, and a high-voltage connection chamber for pole post electrical connections of the battery module 4, are provided in the housing 1.

Bottom venting of gas from the battery module 4 generally necessitates complex protection measures and structure in the design of the battery pack as a whole, whereas the battery pack in the present utility model employs a design in which pole posts for positive and negative poles are arranged at the side and gas is vented from the bottom of the battery module 4, and also employs the battery case described above, thus simplifying the installation structure of the battery module 4 and the housing 1, achieving effective protection in the event of runaway of a battery unit in the battery pack, and meeting the demand to make the battery pack as a whole lightweight. The overall design is simple and easy to implement.

In the description of the present utility model, it must be understood that the orientational or positional relationships indicated by terms such as "centre", "longitudinal", "transverse", "length", "width", "thickness", "up", "down", "front", "rear", "left", "right", "vertical", "horizontal", "top", "bottom", "inner", "outer", "clockwise", "anticlockwise", "axial", "radial", "circumferential", etc. are based on the orientational or positional relationships shown in the drawings, and merely intended to facilitate and simplify description of the present utility model, rather than indicating or implying that the apparatus or element referred to must have a specific orientation or be constructed and operated in a specific orientation, and therefore must not be construed as limiting the present utility model.

In the present utility model, unless otherwise explicitly specified and defined, terms such as "installed", "connected together", "connected", "fixed", etc. should be understood in a broad sense, e.g. may mean fixedly connected, detachably connected or forming a single piece; mechanically connected, electrically connected or capable of communicating with each other; directly connected together, or indirectly connected together via an intermediate medium; internal communication between two elements, or an interactive relationship between two elements, unless otherwise explicitly defined. To a person skilled in the art, the specific meanings of the abovementioned terms in the present utility model may be understood according to the particular circumstances.

Although embodiments of the present utility model have been disclosed above, it is not limited to the applications listed in this Description and the embodiments, and is absolutely applicable to all kinds of fields suitable for the present utility model. To those familiar with this field, other alterations may be easily implemented. Thus, without deviating from the general concept defined by the claims and their equivalent scope, the present utility model is not limited to specific details and the example drawings shown and described herein.

## Claims

1. Battery case, **characterized by** comprising:
a housing (1), for accommodating a battery module (4);
multiple support beams (2) arranged on a wall of the housing (1), for contiguously supporting the accommodated battery module (4);
wherein a corresponding space region is formed between at least two adjacent support beams (2) of the multiple support beams (2) when the battery module (4) is contiguously supported, the space region forming a pressure relief cavity (6) for a gas vent valve (5) at the bottom of the battery module (4) to vent gas into.

2. Battery case according to Claim 1, wherein a wall of the housing (1) is the bottom of the battery case.

3. Battery case according to Claim 1, **characterized in that** a cooling plate (7) is provided at the top of the housing (1), and a side of the cooling plate (7) that is in contact with the battery module (4) is provided with a non-adhesive thermally conductive layer.

4. Battery case according to Claim 1, **characterized in that** the side of the battery module (4) that faces towards the pressure relief cavity (6) is provided with a first fire protection layer (8).

5. Battery case according to Claim 1, **characterized in that** a region of the battery module (4) in contact with the support beam (2) is connected by means of an adhesive layer.

6. Battery case according to Claim 1, **characterized in that** the multiple support beams (2) comprise: multiple transverse beams (210) and multiple longitudinal beams (220) arranged to intersect each other horizontally and perpendicularly;
two adjacent said transverse beams (210) form a corresponding space region when contiguously supporting the battery module (4), and the multiple longitudinal beams (220) divide the space region into multiple space units to form pressure relief cavities (6) for gas vent valves (5) at the bottom of the battery module (4) to vent gas into.

7. Battery case according to Claim 6, **characterized in that** gas vent holes (211) in communication with the pressure relief cavities (6) are provided on the transverse beams (210), and a gas vent channel (9) in communication with the gas vent holes (211) is provided inside a wall of the housing (1);
a filtering gas exit valve (10) is provided on the housing (1), one end of the gas vent channel (9) being in communication with the filtering gas exit valve (10), and a gas outlet of the filtering gas exit valve (10) facing towards the outside of the housing (1).

8. Battery case according to Claim 7, **characterized in that** the gas vent channel (9) is arranged around the outside of the multiple pressure relief cavities (6).

9. Battery case according to Claim 1, **characterized in that** a second fire protection layer is provided on a wall of the housing (1) which is opposite the gas vent valve (5).

10. Battery pack, **characterized by** comprising the battery case according to any one of Claims 1 -9.
